# EUROPEAN PATENT APPLICATION

(11) **EP 1 705 625 A1**
(43) Date of publication of application: **27.09.2006**
(21) Application number: 04789903.4
(22) Date of filing: 29.10.2004
(51) Int. Cl.: G09F 9/30, G09G 3/30

(54) **A DISPLAY DEVICE**

(30) Priority: 11.12.2003 CN 200320119065; 07.07.2004 CN 200420071241
(71) Applicant: Guangzhou Nightrainbow Technology Co., Ltd., Guangzhou, Guangdong 510070 (CN)
(72) Inventor: YAN, Dongmin, Room 702, 7th Floor, Building No. 1, Guangzhou, Guangdong 510070 (CN); LEI, Zhen, Room 702, 7th Floor, Building No. 1, Guangzhou, Guangdong 510070 (CN)
(74) Representative: Sierzputowska, Iwona
(86) International application number: PCT/CN2004/001244
(87) International publication number: WO 2005/057529

(57) **Abstract**

A newly developed indoor or outdoor display fixture used for hanging slogan, commercial signs or various decorations includes a conductive entity and an illumination unit. Various designs are utilized for the connection between the conductive entity and the illumination unit. The conductive entity includes a positive conductive body and a negative conductive body. The illumination unit includes a base and an illumination body, which contents display arrangements according to a predetermined pattern of words, alphabets or graphics. The contents of this display fixture can be easily and conveniently installed and removed. This is a highly useful and portable display system.

## Description

### FIELD OF THE INVENTION:

The present invention relates to an indoor or outdoor display fixture, which is used for hanging slogan, commercial signs or various decorations; particularly, it relates to a lighted diode display fixture used for displaying words, symbols and graphics; it belongs to an advanced display fixture technology.

### BACKBROUND OF THE INVENTION:

The currently available lighted diode display fixtures used for displaying words, symbols and graphics are to fix lighted diode modules into a structural framework that has configurations of words, symbols and graphics, added onto a power control, the display fixture is then able to show various different graphics and pictures. The disadvantages of this type of display fixtures are large size, heavy weight, and a lot of hassles to set it up, difficult to relocate, inconvenient to change the display contents, causing lots of inconvenience to installment personnel; particularly when the installment location is outdoor at a tall wall far above the ground, at places such as a scaffold, a tower, etc., there is also a safety concern that installment personnel might fall off.

### SUMMARY

Because the above described disadvantages, it is an object of the present invention to provide a display fixture that is light weighted, easy and convenient to install, easy and flexible to change display contents and to be carried around. The present invention is easy for installment personnel to set it up, secures installment personnel's safety, and the manufacturing and installment costs are low.

The structural illustrations of the present invention are shown in the drawings. A display system is characterized in that a conductive entity 2 and an illumination unit 3 are included; the conductive entity 2 includes a positive conductive body 21 and a negative conductive body 22; the illumination unit 3 includes a base 31 and an illumination body 32, wherein said illumination body 32 makes display arrangements on the base according to a predetermined pattern of words, alphabets or graphics, and a positive electrode 32A and a negative electrode 32B of the illumination body 32 are respectively connected to the positive conductive body 21 and the negative conductive body 22 of the conductive entity 2; the positive conductive body 21 and the negative conductive body 22 of the conductive entity 2 are connected to a power supply.

Said conductive entity 2 can be set on a support frame 1, or the conductive entity 2 can be directly used as the support frame 1.

Said conductive entity 2 is the at least two of a positive conducting rod and a negative conducting rod installed on the support frame 1, or the two of a positive conducting rod and a negative conducting rod of the conductive entity 2, which can be directly used as the support frame 1.

The positive electrode 32A and the negative electrode 32B of said illumination body 32 are installed into the back of the base 31; the positive electrode 32A and the negative electrode 32B of the illumination body 32 are respectively coupled with a positive snap-on connector 31A and a negative snap-on connector 31B, which are respectively snapped onto the positive conducting rod and the negative conducting rod of the conductive entity 2; or the positive electrode 32A and the negative electrode 32B of the illumination body 32 are respectively connected to the positive snap-on connector and the negative snap-on connector that are installed in the back of the base 31; the illumination unit 3 is snapped onto the positive and negative conducting rods of the conductive entity 2 through the positive snap-on connector 31 A and the negative snap-on connector 31 B that are installed in the back of the base 31.

The distance between said positive snap-on connector and said negative snap-on connector is aligned with the distance between said positive conducting rod and said negative conducting rod.

Said positive conducting rod and said negative conducting rod are installed parallel.

Said positive conducting rod and said negative conducting rod are alternatively allocated and installed on the support frame 1, positive conducting rods are connected with electricity and negative conducting rods are also connected with electricity.

Said positive conductive body 21 and said negative conductive body 22 of said conductive entity 2 are installed in the concave groove A of the support frame 1; the base 31 of the illumination unit 3 is formed with an insert pin B corresponding to the concave groove A; the positive electrode 32A and the negative electrode 32B of the illumination unit 3 are installed at the insert pin B; the insert pin B of the illumination unit 3 is inserted into the concave groove A of the support frame 1; the positive electrode 32A and the negative electrode 32B of the illumination unit 3 are respectively connected to the electricity of the positive conductive body 21 and the negative conductive body 22 of the conductive entity 2.

The positive conductive body 21 and the negative conductive body 22 of said conductive entity 2 are installed inside concave grooves A1 and A2 of the support frame 1; the base 31 of the illumination unit 3 are formed with insert pins B1, B2 corresponding to the concave grooves A1, A2; the positive electrode 32A and the negative electrode 32B of the illumination unit 3 are installed at the insert pins B1, B2, the insert pins B1, B2 of the illumination unit 3 are inserted into the concave grooves A1, A2 of the support frame 1; the positive electrode 32A and negative electrode 32B of the illumination unit 3 are connected to the electricity of the positive conductive body 21 and negative conductive body 22 of the conductive entity 2.

The positive conductive body 21 and the negative conductive body 22 of said conductive entity 2 are installed at the socket or jack 4 of the support frame 1; the positive electrode 32A and negative electrode 32B of the illumination unit 3 are installed on the socket or jack 8 of the base 31, plugs 5 and 7 are connected through wire 6, the illumination unit 3 is plugged into the socket or jack 4 of the support frame 1 through the plug 7; the positive electrode 32A and the negative electrode 32B of the illumination unit 3 are then plugged into the socket or jack 8 of the support frame 1 through the plug 5; the positive electrode 32A and negative electrode 32B of the illumination unit 3 are respectively connected to the electricity of the positive conductive body 21 and negative conductive body 22 of the conductive entity 2.

The positive conductive body 21 and negative conductive body 22 of said conductive entity 2 are respectively installed in the sockets or jacks 41, 42 of the support frame 1; the positive electrode 32A and the negative electrode 32B of the illumination unit 3 are installed on the plugs 51, 52 of the base 31, the plugs 51, 52 are connected to plugs 71, 72 through wires 61, 62; the positive electrode 32A and negative electrode 32B of the illumination unit 3 are installed at the sockets or jacks 81, 82 of the base 31, plugs 51, 52 are connected to plugs 71, 72 through wires 61, 62; the illumination unit 3 is plugged into the sockets or jacks 41, 42 of the support frame 1 through the plugs 71, 72; the positive electrode 32A and negative electrode 32B of the illumination unit 3 are plugged into the sockets or jacks 81, 82 of the support frame 1 through the plugs 51, 52; the positive electrode 32A and negative electrode 32B of the illumination unit 3 are respectively connected to the electricity of the positive conductive body 21 and the negative conductive body 22 of the conductive entity 2.

The positive conductive body 21 and the negative conductive body 22 of the conductive entity 2 are installed at the socket or jack 4 of the support frame 1; the positive electrode 32A and the negative electrode 32B of the illumination unit 3 are installed at the plug or socket 5 of the base 31; the illumination unit 3 is then plugged into the socket or jack 4 of the support frame 1 through the plug or socket 5; the positive electrode 32A and negative electrode 32B of the illumination unit 3 are respectively connected to the electricity of the positive conductive body 21 and the negative conductive body 22 of the conductive entity 2.

The positive conductive body 21 and the negative conductive body 22 of said conductive entity 2 are respectively installed at the sockets or jacks 41, 42 of the support frame 1; the positive electrode 32A and the negative electrode 32B of the illumination unit 3 that are installed at the base 31 can be directly plugged into the sockets or jacks 41, 42 of the support frame 1, or the positive electrode 32A and the negative electrode 32B of the illumination unit 3 are installed at the plugs 51, 52 which are installed on the base 31, the illumination unit 3 is then plugged into the sockets or jacks 41, 42 of the support frame 1 through the plugs 51, 52; the positive electrode 32A and negative electrode 32B of the illumination unit 3 are respectively connected to the electricity of the positive conductive body 21 and the negative conductive body 22 of the conductive entity 2.

Said support frame 1 is formed with a plurality of concave grooves, the positive conductive body 21 and the negative conductive body 22 of the conductive entity 2 are formed with a plurality of electrode boards, which are respectively installed at the upper and lower inner surfaces of the concave grooves of the support frame 1; the positive electrode 32A and negative electrode 32B of the illumination unit 3 are formed with flexible electrodes, which are respectively installed at the upper and lower areas of the base 31; the base 31 of the illumination unit 3 is plugged into the concave grooves of the support frame 1; the positive electrode 32A and negative electrode 32B of the illumination unit 3 are respectively connected to the electricity of the positive conductive body 21 and the negative conductive body 22 of the conductive entity 2.

Said support frame 1 is formed with a plurality of concave grooves at its upper inner surfaces or lower inner surfaces; the positive conductive body 21 and the negative conductive body 22 of the conductive entity 2 are made into electrode boards, which are all installed at the upper inner surface or at the lower inner surface of the support frame 1; the positive electrode 32A and the negative electrode 32B of the illumination unit 3 are formed with flexible electrodes, which are respectively installed at the upper area of the base 31; the base 31 of the illumination unit 3 is plugged into the concave groove of the support frame 1; the positive electrode 32A and the negative electrode 32B of the illumination unit 3 are respectively connected to the electricity of the positive conductive body 21 and the negative conductive body 22 of the conductive entity 2.

Said support frame 1 can be formed with a magnetic tier, the positive conductive body 21 and the negative conductive body 22 of the conductive entity 2 are allocated over the magnetic tier; the positive electrode 32A and the negative electrode 32B of the illumination unit 3 are respectively installed at the back of the base 31; the illumination unit 3 is magnetized onto the support frame 1 through the magnetic tier element 8, which is installed at the back of the base 31; the positive electrode 32A and the negative electrode 32B of the illumination unit 3 are connected to the electricity of the positive conductive body 21 and the negative conductive body 22 of the conductive entity 2 respectively.

Said conductive entity 2 is formed as stripes, the positive conductive body 21 and the negative conductive body 22 are alternatively allocated therein, and all the positive conductive bodies are connected to electricity; the negative conductive bodies are also connected to electricity, wherein any distance between a positive conductive body and its adjacent negative conductive body is aligned with the distance between the positive electrode 32A and the negative electrode 32B of the illumination unit 3.

Said conductive entity 2 can also be formed as a lattice structure, any distance between a positive conductive body 21 and its adjacent negative conductive body 22 is aligned with the distance between the positive electrode 32A and the negative electrode 32B of the illumination unit 3.

Said illumination body 32 is an illuminating diode.

Said illumination body 32 is arranged on the front surface of the base 31.

Because the structure of the present invention is chosen to include conductive entities and illumination units, wherein the conductive entities include positive conductive entities and negative conductive entities, the illumination units include bases and illumination bodies, the illumination bodies are arranged on the bases according to predetermined patterns of words, alphabets or graphics, and the positive electrodes and the negative electrodes of the illumination bodies are respectively connected to the electricity of the positive conductive bodies and the negative conductive bodies of the conductive entities through different types of structures; hence, when the positive conductive bodies and the negative conductive bodies of the illumination bodies are connected to the positive electrodes and the negative electrodes of the illumination bodies, the illumination bodies are illuminated; different settings of illuminating words, alphabets or graphics are then shown thereupon; integrating many different meaningful illumination units and fixing these units onto the conductive bodies, certain meanings are formed and get to be expressed; when non-usage occurs or there is a need to change the display contents, simply remove the illumination units that are fixed onto the conductive entities, the usage is very convenient. The structure of the present invention is simple, very convenient for the installation staff to work on, the safety of the installation staff can be assured, and the manufacturing and installation cost are low. In addition, the contents can be flexibly changed according to needs; furthermore, illuminating diodes consumes less electricity, it can be driven by safe low voltage power source, with better safety standard, it is a well designed, conveniently portable, well functioned, and easily utilized display system.

### DESCRIPTION OF DRAWINGS

Figure 1 illustrates the conductive entity 2 of the preferred embodiment 1 of the present invention, a schematic diagram showing positive conducting rods and negative conducting rods installed on a support frame 1;
Figure 2 illustrates the schematic diagram of the illumination unit 3 of the preferred embodiment 1 of the present invention;
Figure 3 illustrates the back view of Figure 2;
Figure 4 illustrates the usage condition of the preferred embodiment 1 of the present invention;
Figure 5 illustrates the back view of Figure 4;
Figure 6 illustrates the schematic diagram of the preferred embodiment 2 of the present invention;
Figure 7 illustrates the main view of the positive conductive body 21 and the negative conductive body 22 of the conductive entity 2 installed on the support frame 1 of the preferred embodiment 2 of the present invention;
Figure 8 illustrates the schematic diagram of the illumination unit 3 of the preferred embodiment 2 of the present invention;
Figure 9 illustrates the back view of Figure 8;
Figure 10 illustrates the usage condition of the preferred embodiment 2 of the present invention;
Figure 11 illustrates the schematic diagram of the preferred embodiment 3 of the present invention;
Figure 12 illustrates the main view of the positive conductive body 21 and the negative conductive body 22 of the conductive entity 2 installed on the support frame 1 of the preferred embodiment 3 of the present invention;
Figure 13 illustrates the schematic diagram of the illumination unit 3 of the preferred embodiment 3 of the present invention;
Figure 14 illustrates the back view of Figure 13;
Figure 15 illustrates the usage condition of the preferred embodiment 3 of the present invention;
Figure 16 illustrates the schematic diagram of the positive conductive body 21 and the negative conductive body 22 of the conductive entity 2 installed on the support frame 1 of the preferred embodiment 4 of the present invention;
Figure 17 illustrates the wire connections of the preferred embodiment 4 of the present invention;
Figure 18 illustrates the schematic diagram of the illumination unit 3 of the preferred embodiment 4 of the present invention;
Figure 19 illustrates the usage condition of the preferred embodiment 4 of the present invention;
Figure 20 illustrates the schematic diagram of the positive conductive body 21 and the negative conductive body 22 of the conductive entity 2 installed on the support frame 1 of the preferred embodiment 5 of the present invention;
Figure 21 illustrates the wire connections of the preferred embodiment 5 of the present invention;
Figure 22 illustrates the schematic diagram of the illumination unit 3 of the preferred embodiment 5 of the present invention;
Figure 23 illustrates the usage condition of the preferred embodiment 5 of the present invention;
Figure 24 illustrates the schematic diagram of the positive conductive body 21 and the negative conductive body 22 of the conductive entity 2 installed on the support frame 1 of the preferred embodiment 6 of the present invention;
Figure 25 illustrates the schematic diagram of the illumination unit 3 of the preferred embodiment 6 of the present invention;
Figure 26 illustrates the back view of Figure 25;
Figure 27 illustrates the usage condition of the preferred embodiment 6 of the present invention;
Figure 28 illustrates the schematic diagram of the positive conductive body 21 and the negative conductive body 22 of the conductive entity 2 installed on the support frame 1 of the preferred embodiment 7 of the present invention;
Figure 29 illustrates the schematic diagram of the illumination unit 3 of the preferred embodiment 7 of the present invention;
Figure 30 illustrates the back view of Figure 29;
Figure 31 illustrates the usage condition of the preferred embodiment 7 of the present invention;
Figure 32 illustrates the schematic diagram of the preferred embodiment 8 of the present invention;
Figure 33 illustrates the main view of the support frame 1 of the preferred embodiment 8 of the present invention;
Figure 34 illustrates the schematic diagram of the illumination unit 3 of the preferred embodiment 8 of the present invention;
Figure 35 illustrates the usage condition of the preferred embodiment 8 of the present invention;
Figure 36 illustrates the schematic diagram of the positive conductive body 21 and the negative conductive body 22 of the conductive entity 2 installed on the support frame 1 of the preferred embodiment 9 of the present invention;
Figure 37 illustrates the schematic diagram of the support frame 1 of the preferred embodiment 9 of the present invention;
Figure 38 illustrates the schematic diagram of the illumination unit 3 of the preferred embodiment 9 of the present invention;
Figure 39 illustrates the usage condition of the preferred embodiment 9 of the present invention;
Figure 40 illustrates the schematic diagram of the positive conductive body 21 and the negative conductive body 22 of the conductive entity 2 installed on the support frame 1 of the preferred embodiment 10 of the present invention;
Figure 41 illustrates the schematic diagram of the illumination unit 3 of the preferred embodiment 10 of the present invention;
Figure 42 illustrates the back view of Figure 41;
Figure 43 illustrates the schematic diagram of the positive conductive body 21 and the negative conductive body 22 of the conductive entity 2 installed on the support frame 1 of the preferred embodiment 11 of the present invention; and
Figure 44 illustrates the usage condition of the preferred embodiment 11 of the present invention.

### DETAILED DESCRIPTION OF THE INVENTION

### Preferred Embodiment 1:

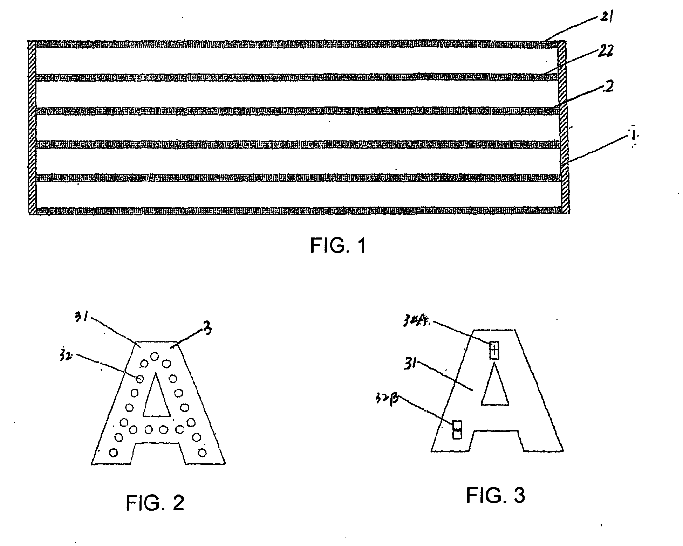

The schematic diagrams of the present invention are shown in Figure 1, Figure 2, Figure 3, Figure 4, and Figure 5 include a conductive entity 2 and an illumination unit 3; the conductive entity 2 includes a positive conductive body 21 and a negative conductive body 22, the illumination unit 3 includes a base 31 and an illumination body 32, wherein the illumination body 32 makes display arrangements according to a predetermined pattern of words, alphabets or graphics on the base 31, and the positive electrode 32A and the negative electrode 32B of the illumination body 32 are connected to the electricity of the positive conductive body 21 and the negative conductive body 22 of the conductive entity 2 respectively; the positive conductive body 21 and the negative conductive body 22 of the conductive entity 2 are connected to a power supply. In the present preferred embodiment, said illumination body 32 includes some illumination diodes.

In the present preferred embodiment, said illumination body 32 is arranged on the front surface of the base 31, the conductive entity 2 is installed on a support frame 1 comprising at least two of a positive conducting rod and a negative conducting rod, the positive electrode 32A and negative electrode 32B of said illumination body 32 are installed at the back surface of the base 31, the positive electrode 32A and the negative electrode 32B of said illumination body 32 are respectively made with a positive snap-on connector and a negative snap-on connector, which can be respectively snapped onto the positive conducting rod and negative conducting rod of the conductive entity 2; or the positive electrode 32A and the negative electrode 32B of the illumination body 32 are respectively connected to the positive snap-on connector and the negative snap-on connector installed at the back surface of the base 31, the illumination unit 3 is snapped onto the positive conducting rod and the negative conducting rod of the conductive entity 2 through the positive snap-on connector and the negative snap-on connector that are installed at the back surface of the base 31, the distance between the positive snap-on connector and the negative snap-on connector is aligned with the distance between the positive conducting rod and the negative conducting rod.

In the present preferred embodiment, for the purpose of convenient manufacturing and installment, said positive conducting rod and negative conducting rod are installed in parallel, and the positive conducting rod and negative conducting rod are alternatively installed on the support frame 1; positive conducting rods are connected to electricity all together and negative conducting rods are connected to electricity all together.

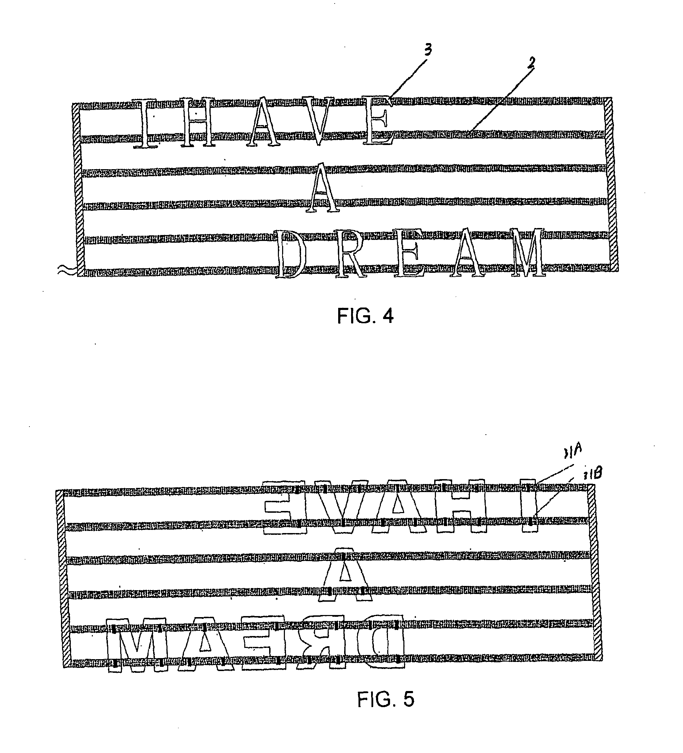

When utilizing the present invention, such as shown in Figure 4, Figure 5, the positive conducting rods and the negative conducting rods of the conductive entity 2 are connected to a low voltage power supply; the illumination unit 3 is snapped onto the positive conducting rod and the negative conducting rod of the conductive entity 2 through the positive snap-on connector and the negative snap-on connector that are installed at the back surface of its base 31; the illumination body 32 is then illuminated, the prearranged words, alphabets or graphics are therefore displayed; combining a plurality of illumination units 3 showing different meanings and fixing them onto the positive conducting rods and the negative conducting rods of the conductive entity 2, some special expressions can then be formed and well expressed.

When the display contents are no longer necessary or the contents need to be replaced, the illumination unit 3 fixed onto the positive conducting rod and the negative conducting rod of the conductive entity 2 can simply be taken off, the usage is extremely convenient.

### Preferred Embodiment 2:

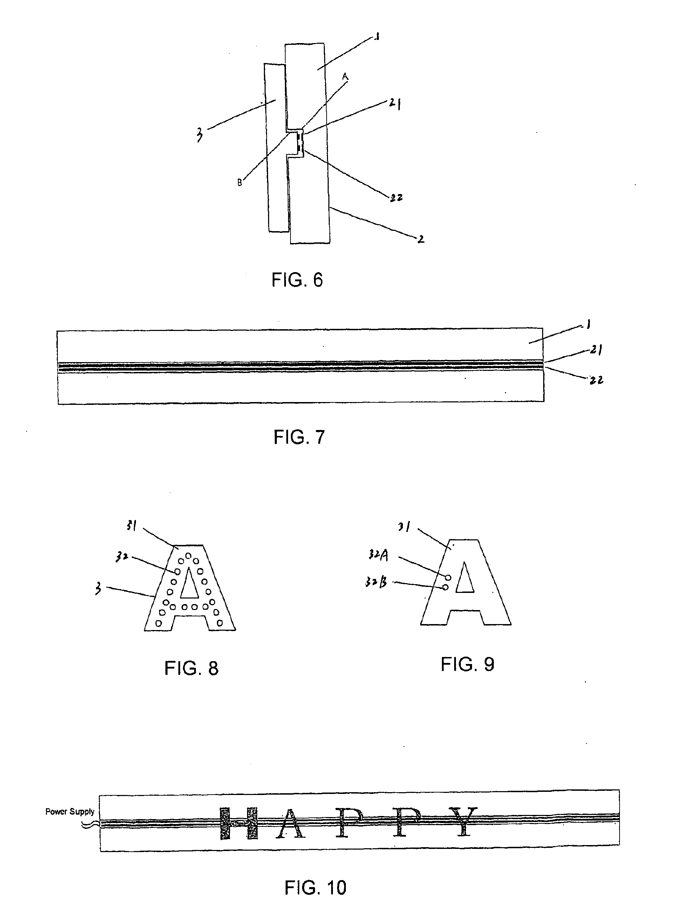

The schematic diagrams of the present invention are shown in Figure 6, Figure 7, Figure 8, Figure 9, Figure 10, wherein the structural difference comparing to the preferred embodiment 1 is that the positive conductive body 21 and the negative conductive body 22 of said conductive entity 2 are installed inside a concave groove A of the support frame 1, an insert pin B corresponding to the concave groove A is formed at the base 31 of the illumination unit 3; the positive electrode 32A and the negative electrode 32B of the illumination unit 3 are installed at the insert pin B, the insert pin B of the illumination unit 3 is inserted into the concave groove A of the support frame 1, the positive electrode 32A and the negative electrode 32B of the illumination unit 3 are respectively connected to the electricity of the positive conductive body 21 and the negative conducive body 22 of the conductive entity 2.

When utilizing the present invention, as shown in Figure 10, the positive conductive body 21 and the negative conductive body 22 of the conductive entity 2 are connected to a low voltage power supply; inserting the insert pin B of the illumination unit 3 into the concave groove A of the support frame 1, the positive conductive body 21 and negative conductive body 22 of the conductive entity 2 are then connected to the positive electrode 32A and the negative electrode 32B of the illumination body 32, the illumination body 32 is illuminated, the prearranged words, alphabets or graphics are therefore displayed; inserting a plurality of illumination bodies 3 having different meaningful contents into the concave groove A of the support frame 1, some special expressions can then be formed and expressed.

When display contents are no longer necessary or the contents need to be replaced, the illumination unit 3 inserted into the concave groove A of support frame 1 can simply be taken off, the usage is extremely convenient.

### Preferred Embodiment 3:

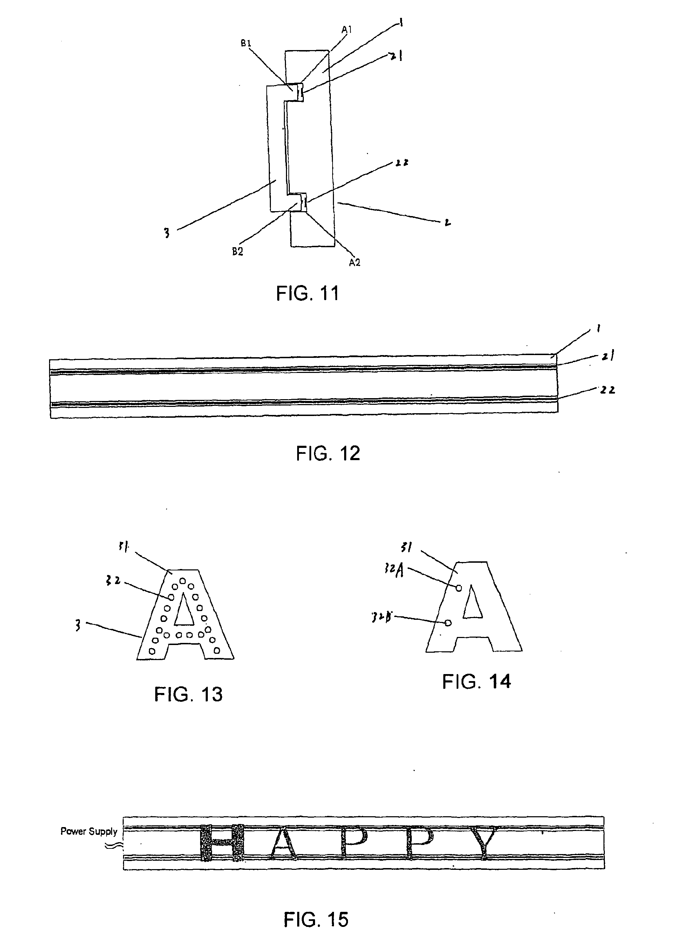

The schematic diagrams of the present invention are shown in Figure 11, Figure 12, Figure 13, Figure 14, Figure 15, wherein the structural difference comparing to the preferred embodiment 1 is that the positive conductive body 21 and the negative conductive body 22 of said conductive entity 2 are respectively installed inside the concave grooves A1, A2 of the support frame 1; insert pins B1, B2 corresponding to the concave grooves A1, A2 are formed at the base 31 of the illumination unit 3; the positive electrode 32A and the negative electrode 32B of the illumination unit 3 are installed at the concave grooves A1, A2 of the support frame 1, the positive electrode 32A and the negative electrode 32B of the illumination unit 3 are respectively connected to the electricity of the positive conductive body 21 and the negative body 22 of the conductive entity 2.

When utilizing the present invention, as shown in Figure 15, the positive conductive body 21 and the negative conductive body 22 of the conductive entity 2 are connected to a low voltage power supply; inserting the insert pins B1, B2 of the illumination unit 3 into the concave grooves A1, A2 of the support frame 1, the positive conductive body 21 and negative conductive body 22 of the conductive entity 2 are then connected to the positive electrode 32A and the negative electrode 32B of the illumination body 32, the rest of the principles are similar to those of the preferred embodiment 2.

### Preferred Embodiment 4:

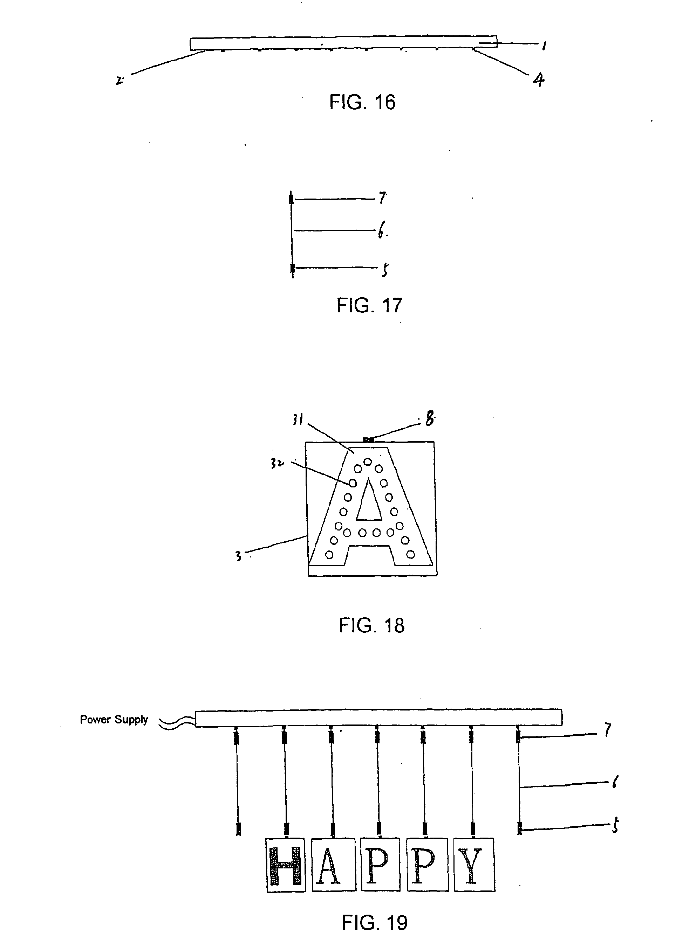

The schematic diagrams of the present invention are shown in Figure 16, Figure 17, Figure 18, Figure 19, wherein the structural difference comparing to the preferred embodiment 1 is that the positive conductive body 21 and the negative conductive body 22 of the conductive entity 2 are installed at the sockets or jacks 4 of the support frame 1; the positive electrode 32A and the negative electrode 32B of the illumination unit 3 are installed at the socket or jack 8 of the base 31; a plug 5 is connected to a plug 7 through a wire 6; the illumination unit 3 is plugged into the socket or jack 4 of the support frame 1 through a plug 7; the positive electrode 32A and the negative electrode 32B of the illumination unit 3 are connected to the socket or jack 8 of the support frame 1 through the plug 5; the positive electrode 32A and the negative electrode 32B of the illumination unit 3 are respectively connected to the positive conductive body 21 and the negative conductive body 22 of the conductive entity 2.

When utilizing the present invention, as shown in Figure 19, the positive conductive body 21 and the negative conductive body 22 of the conductive entity 2 are connected to a low voltage power supply, the positive conductive body 21 and negative conductive body 22 of the conductive entity 2 are then connected to the positive electrode 32A and the negative electrode 32B of the illumination body 32, the rest of the principles are similar to those of the preferred embodiment 2.

### Preferred Embodiment 5:

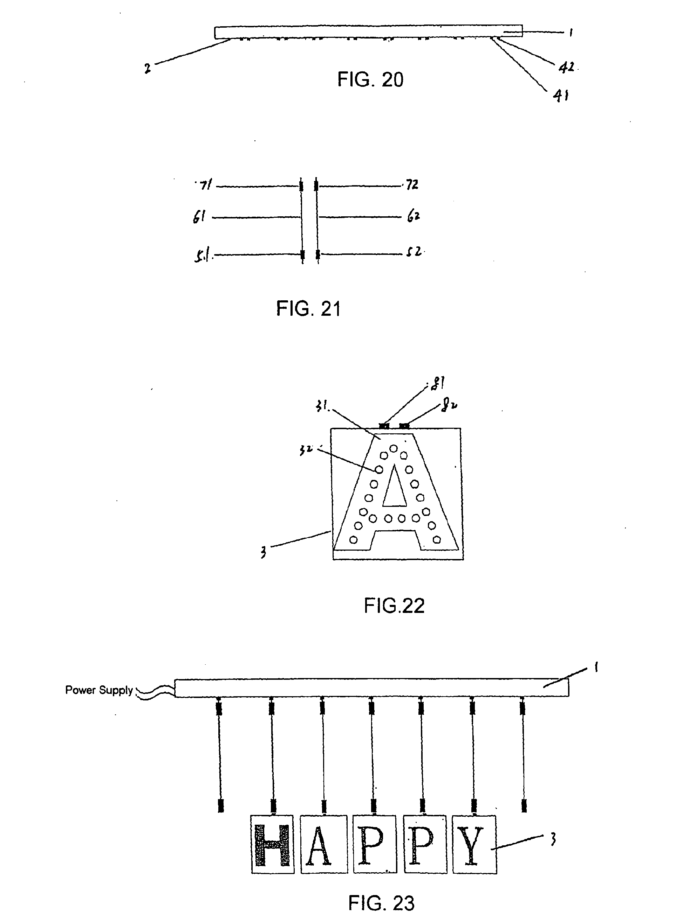

The schematic diagrams of the present invention are shown in Figure 20, Figure 21, Figure 22, Figure 23, wherein the structural difference comparing to the preferred embodiment 4 is that the positive conductive body 21 and the negative conductive body 22 of the conductive entity 2 are installed at the sockets or jacks 41, 42 of the support frame 1; the positive electrode 32A and the negative electrode 32B of the illumination unit 3 are connected at plugs 51, 52 of the base 31; the plugs 51, 52 are connected to plugs 71, 72 through wires 61, 62; the positive electrode 32A and the negative electrode 32B of the illumination unit 3 are installed at sockets or jacks 81, 82 of the base 31; the plugs 51, 52 are connected to the plugs 71, 72 through the wires 61, 62; the illumination unit 3 is plugged into the sockets or jacks 41, 42 of the support frame 1 through the plugs 71, 72; the positive electrode 32A and the negative electrode 32B of the illumination unit 3 are plugged into the sockets or jacks 81, 82 of the support frame 1 through the plugs 51, 52; the positive electrode 32A and the negative electrode 32B of the illumination unit 3 are respectively connected to the electricity of the positive conductive body 21 and the negative conductive body 22 of the conductive entity 2.

When utilizing the present invention, as shown in Figure 23, the positive conductive body 21 and the negative conductive body 22 of the conductive entity 2 are connected to a low voltage power supply; the positive conductive body 21 and negative conductive body 22 of the conductive entity 2 are then connected to the positive electrode 32A and the negative electrode 32B of the illumination body 32, the rest of the principles are similar to those of the preferred embodiment 2.

### Preferred Embodiment 6:

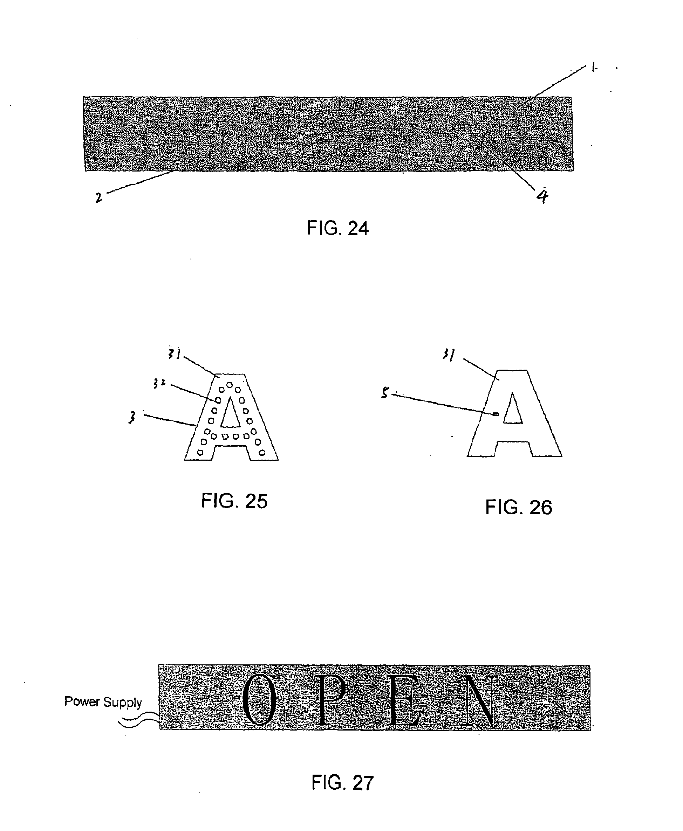

The schematic diagrams of the present invention are shown in Figure 24, Figure 25, Figure 26, Figure 27, wherein the structural difference comparing to the preferred embodiment 4 is that the positive conductive body 21 and the negative conductive body 22 of the conductive entity 2 are installed at the socket or jack 4 of the support frame 1; the positive electrode 32A and the negative electrode 32B of the illumination unit 3 are installed at the socket or jack 5 of the base 31, the illumination unit 3 is plugged into the socket or jack 4 of the support frame 1 through the socket or jack 5; the positive electrode 32A and the negative electrode 32B of the illumination unit 3 are respectively connected to the electricity of the positive conductive body 21 and the negative conductive body 22 of the conductive entity 2.

When utilizing the present invention, as shown in Figure 27, the positive conductive body 21 and the negative conductive body 22 of the conductive entity 2 are connected to a low voltage power supply; the socket or jack 5 of the illumination unit 3 is plugged into the socket or jack 4 of the support frame 1, the positive conductive body 21 and negative conductive body 22 of the conductive entity 2 are then connected to the positive electrode 32A and the negative electrode 32B of the illumination body 32, the rest of the principles are similar to those of the preferred embodiment 2.

### Preferred Embodiment 7:

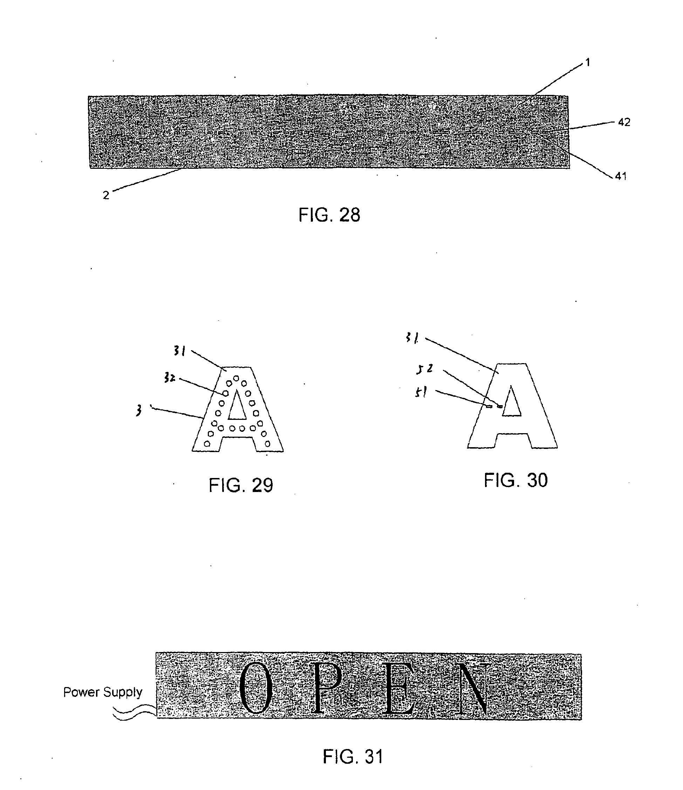

The schematic diagrams of the present invention are shown in Figure 28, Figure 29, Figure 30, Figure 31, wherein the structural difference comparing to the preferred embodiment 6 is that the positive conductive body 21 and the negative conductive body 22 of the conductive entity 2 are installed at the sockets or jacks 41, 42 of the support frame 1; the positive electrode 32A and the negative electrode 32B of the illumination unit 3 that are installed on the base 31 can be directly plugged into the sockets or jacks 41, 42 of the support frame 1, or the positive electrode 32A and the negative electrode 32B of the illumination unit 3 are installed at the plugs 51, 52; the illumination unit 3 is plugged into the sockets or jacks 41, 42 of the support frame 1 through the plugs 51, 52; the positive electrode 32A and the negative electrode 32B of the conductive entity 2 are respectively connected to the electricity of the positive conductive body 21 and the negative conductive body 22.

When utilizing the present invention, as shown in Figure 31, the positive conductive body 21 and the negative conductive body 22 of the conductive entity 2 are connected to a low voltage power supply; the plugs 51, 52 of the illumination unit 3 are plugged into the sockets or jacks 41, 42 of the support frame 1; the positive conductive body 21 and negative conductive body 22 of the conductive entity 2 are then connected to the positive electrode 32A and the negative electrode 32B of the illumination body 32, the rest of the principles are similar to those of the preferred embodiment 2.

### Preferred Embodiment 8:

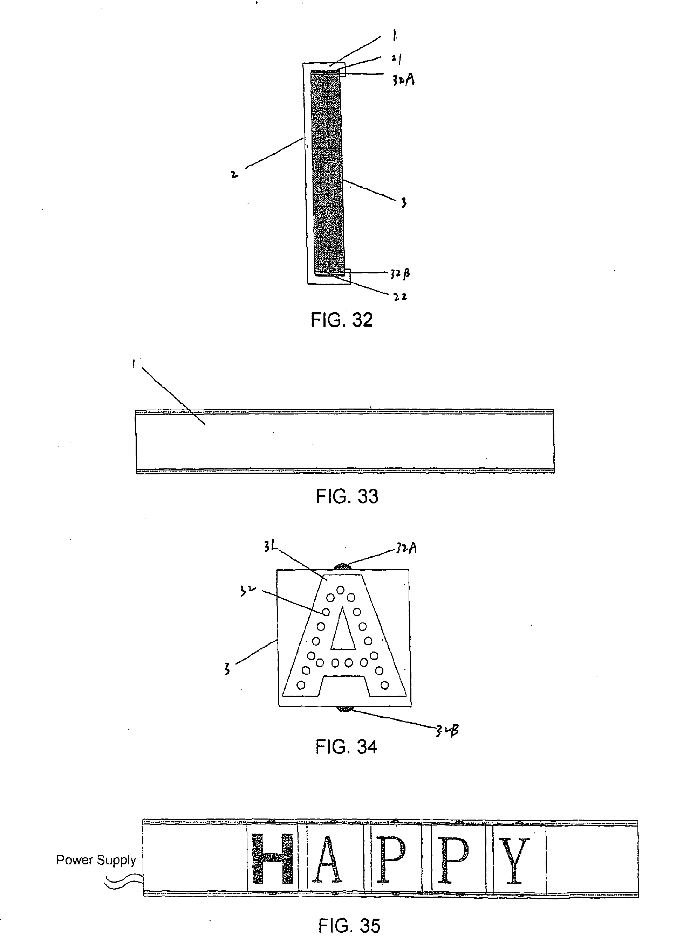

The schematic diagrams of the present invention are shown in Figure 32, Figure 33, Figure 34, Figure 35, wherein the structural difference comparing to the preferred embodiment 1 is that said support frame 1 is formed with a concave groove having stopping ends, the positive conductive body 21 and the negative conductive body 22 of the conductive entity 2 are made into a plurality of electrode boards, which are respectively installed at the upper inner surface and the lower inner surface of the concave groove of the support frame 1; the positive electrode 32A and the negative electrode 32B of the illumination unit 3 are formed with length-adjustable electrodes, which are respectively installed at the upper and lower areas of the base 31; the base 31 of the illumination unit 3 is press-fit into the concave groove of the support frame 1; the positive electrode 32A and the negative electrode 32B of the illumination unit 3 are respectively connected to the electricity of the positive conductive body 21 and the negative conductive body 22 of the conductive entity 2.

When utilizing the present invention, as shown in Figure 35, the positive conductive body 21 and the negative conductive body 22 of the conductive entity 2 are connected to a low voltage power supply; the length-adjustable electrodes of the illumination unit 3 are connected with the electrode boards at the upper and lower inner surfaces in the concave groove of the support frame 1, the positive conductive body 21 and negative conductive body 22 of the conductive entity 2 are then connected to the positive electrode 32A and the negative electrode 32B of the illumination body 32, the rest of the principles are similar to those of the preferred embodiment 2.

### Preferred Embodiment 9:

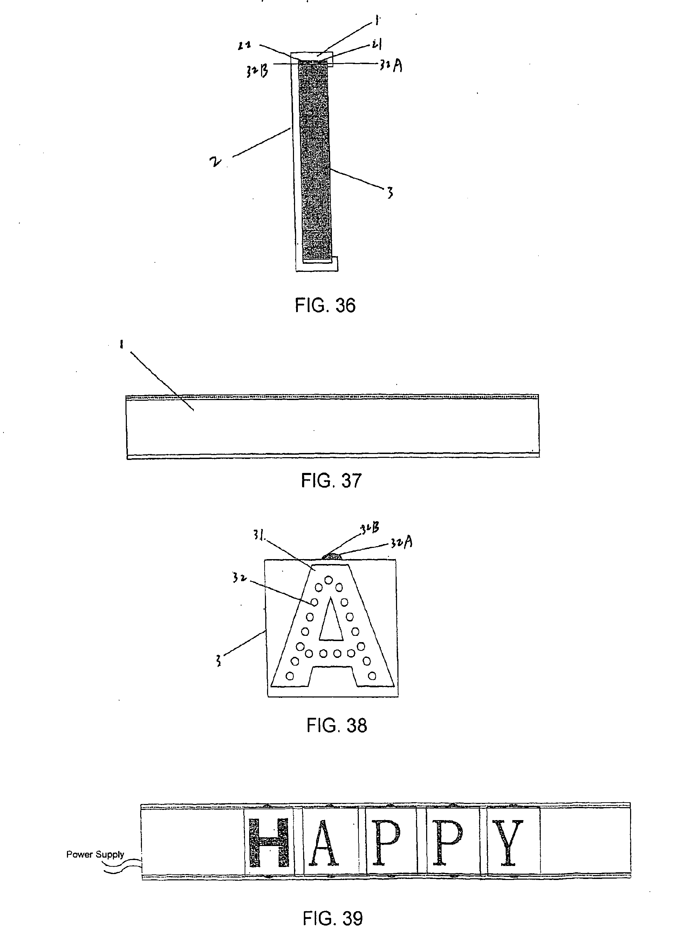

The schematic diagrams of the present invention are shown in Figure 36, Figure 37, Figure 38, Figure 39, wherein the structural difference comparing to the preferred embodiment 8 is that said support frame 1 is formed with a concave groove having stopping ends, at its upper inner surface or lower inner surface, the positive conductive body 21 and the negative conductive body 22 of the conductive entity 2 are made into electrode boards, which are installed all at the upper inner surface or all at the lower inner surface of the support frame 1; the positive electrode 32A and the negative electrode 32B of the illumination unit 3 are formed with length-adjustable electrodes, which are installed at the upper area of the base 31; the base 31 of the illumination unit 3 is press-fit into the concave groove of the support frame 1; the positive electrode 32A and the negative electrode 32B of the illumination unit 3 are respectively connected to the electricity of the positive conductive body 21 and the negative conductive body 22 of the conductive entity 2.

When utilizing the present invention, as shown in Figure 39, the positive conductive body 21 and the negative conductive body 22 of the conductive entity 2 are connected to a low voltage power supply; the length-adjustable electrodes of the illumination unit 3 are press-fit into the electrode boards at the upper or lower inner surface in the concave groove of the support frame 1, the positive conductive body 21 and negative conductive body 22 of the conductive entity 2 are then connected to the positive electrode 32A and the negative electrode 32B of the illumination body 32, the rest of the principles are similar to those of the preferred embodiment 2.

### Preferred Embodiment 10:

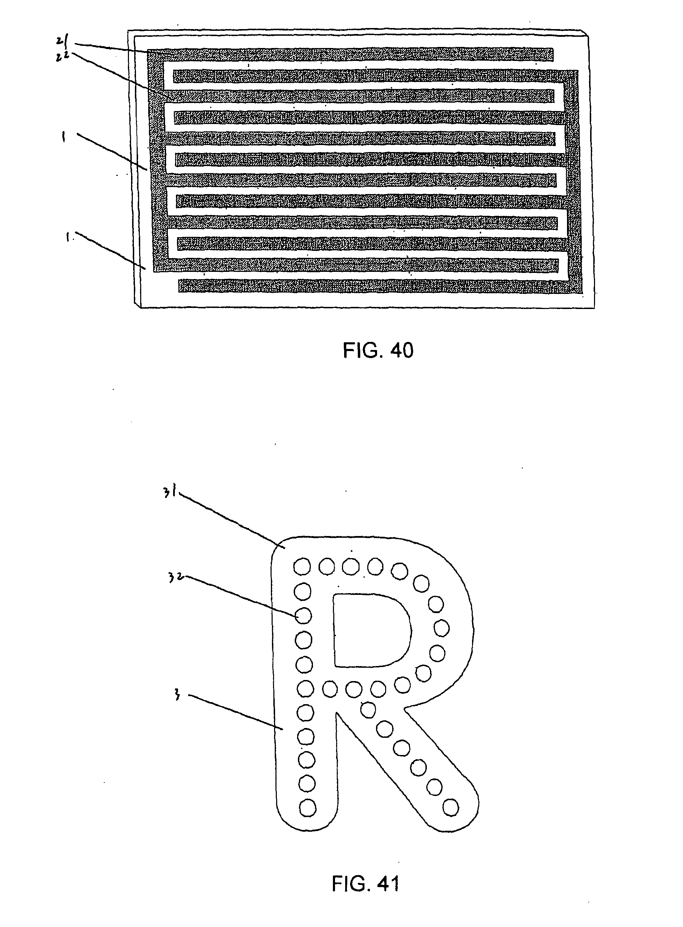

The schematic diagrams of the present invention as shown in Figure 40, Figure 41, Figure 42, wherein the structural difference comparing to the preferred embodiment 1 is that said support frame 1 is formed with a magnetic tier, the positive conductive body 21 and the negative conductive body 22 of the conductive entity 2 are allocated over the magnetic tier; the positive electrode 32A and the negative electrode 32B of the illumination unit 3 are respectively installed at the back of the base 31; the illumination unit 3 is magnetized onto the support frame 1 through the magnetic tier element 8, which is installed at the back of the base 31; the positive electrode 32A and the negative electrode 32B of the illumination unit 3 are respectively connected to the electricity of the positive conductive body 21 and the negative conductive body 22 of the conductive entity 2.

In the present preferred embodiment, said conductive entity 2 is formed as stripes, the positive conductive body 21 and the negative conductive body 22 are alternatively allocated therein, and the positive conductive bodies are interconnected to each other and to electricity; the negative conductive bodies are also interconnected to each other and to electricity; any distance between a positive conductive body and its adjacent negative conductive body is aligned with the distance between the positive electrode 32A and the negative electrode 32B of the illumination unit 3.

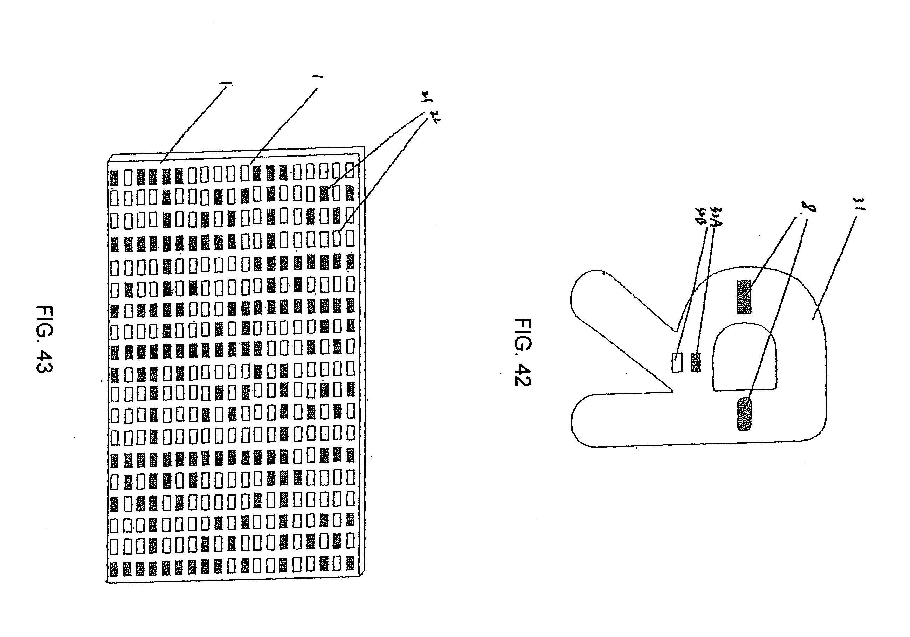

When utilizing the present invention, as shown in Figure 42, the positive conductive body 21 and the negative conductive body 22 of the conductive entity 2 are connected to a low voltage power supply; the illumination unit 3 is magnetized onto the support frame 1 through the magnetic tier element 8, which is installed at the back of the base 31; the positive conductive body 21 and negative conductive body 22 of the conductive entity 2 are then connected to the positive electrode 32A and the negative electrode 32B of the illumination body 32, the rest of the principles are similar to those of the preferred embodiment 2.

### Preferred Embodiment 11:

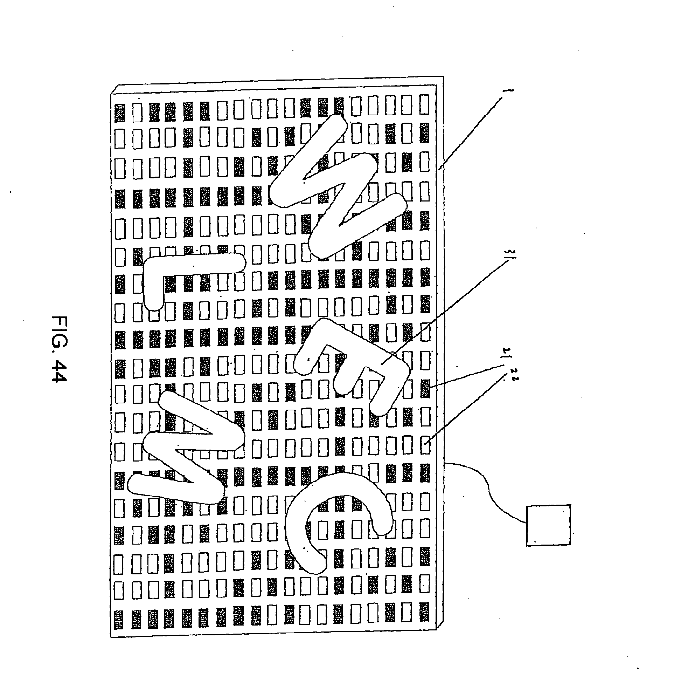

The schematic diagrams of the present invention as shown in Figure 43, Figure 44, wherein the structure is the same as the one of the preferred embodiment 10; the difference is that said conductive entity 2 is formed as a lattice structure, any distance between a positive conductive body 21 and its adjacent negative conductive body 22 is aligned with the distance between the positive electrode 32A and the negative electrode 32B of the illumination unit 3.

The principles of the present embodiment are the same as those of the preferred embodiment 10.

## Claims

1. A display system is **characterized in that** a conductive entity (2) and an illumination unit (3) are included, the conductive entity (2) includes a positive conductive body (21) and a negative conductive body (22), the illumination unit (3) includes a base (31) and an illumination body (32), wherein said illumination body (32) makes display arrangements on the base according to a predetermined pattern of words, alphabets or graphics, and a positive electrode (32A) and a negative electrode (32B) of the illumination body (32) are respectively connected to the positive conductive body (21) and the negative conductive body (22) of the conductive entity (2), the positive conductive body (21) and the negative conductive body (22) of the conductive entity (2) are connected to a power supply.

2. The display system, as claimed in claim 1, is **characterized in that** said conductive entity (2) can be set on a support frame (1), or the conductive entity (2) can be directly used as the support frame (1).

3. The display system, as claimed in claim 2, is **characterized in that** said conductive entity (2) is the at least two of a positive conducting rod and a negative conducting rod installed on the support frame (1), or the two of a positive conducting rod and a negative conducting rod of the conductive entity (2), which can be directly used as the support frame (1).

4. The display system, as claimed in claim 3, is **characterized in that** the positive electrode (32A) and the negative electrode (32B) of said illumination body (32) are installed into the back of the base (31), the positive electrode (32A) and the negative electrode (32B) of the illumination body (32) are respectively coupled with a positive snap-on connector (31A) and a negative snap-on connector (31B), which are respectively snapped onto the positive conducting rod and the negative conducting rod of the conductive entity (2), or the positive electrode (32A) and the negative electrode (32B) of the illumination body (32) are respectively connected to the positive snap-on connector and the negative snap-on connector that are installed in the back of the base (31), the illumination unit (3) is snapped onto the positive and negative conducting rods of the conductive entity (2) through the positive snap-on connector (31 A) and the negative snap-on connector (31B) that are installed in the back of the base (31).

5. The display system, as claimed in claim 4, is **characterized in that** the distance between said positive snap-on connector and said negative snap-on connector is aligned with the distance between said positive conducting rod and said negative conducting rod.

6. The display system, as claimed in claim 5, is **characterized in that** said positive conducting rod and said negative conducting rod are installed parallel.

7. The display system, as claimed in claim 6, is **characterized in that** said positive conducting rod and said negative conducting rod are alternatively allocated and installed on the support frame (1), positive conducting rods are connected with electricity and negative conducting rods are also connected with electricity.

8. The display system, as claimed in claim 1, is **characterized in that** said positive conductive body (21) and said negative conductive body (22) of said conductive entity (2) are installed in the concave groove A of the support frame (1), the base (31) of the illumination unit (3) is formed with an insert pin B corresponding to the concave groove A, the positive electrode (32A) and the negative electrode (32B) of the illumination unit (3) are installed at the insert pin B, the insert pin B of the illumination unit (3) is inserted into the concave groove A of the support frame (1), the positive electrode (32A) and the negative electrode (32B) of the illumination unit (3) are respectively connected to the electricity of the positive conductive body (21) and the negative conductive body (22) of the conductive entity (2).

9. The display system, as claimed in claim 1, is **characterized in that** the positive conductive body (21) and the negative conductive body (22) of said conductive entity (2) are installed inside concave grooves A1 and A2 of the support frame (1), the base (31) of the illumination unit (3) are formed with insert pins B1, B2 corresponding to the concave grooves A1, A2, the positive electrode (32A) and the negative electrode (32B) of the illumination unit (3) are installed at the insert pins B1, B2, the insert pins B1, B2 of the illumination unit (3) are inserted into the concave grooves A1, A2 of the support frame (1), the positive electrode (32A) and negative electrode (32B) of the illumination unit (3) are connected to the electricity of the positive conductive body (21) and negative conductive body (22) of the conductive entity (2).

10. The display system, as claimed in claim 1, is **characterized in that** the positive conductive body (21) and the negative conductive body (22) of said conductive entity (2) are installed at the socket or jack (4) of the support frame (1), the positive electrode (32A) and negative electrode (32B) of the illumination unit (3) are installed on the socket or jack (8) of the base (31), plugs (5) and (7) are connected through wire (6), the illumination unit (3) is plugged into the socket or jack (4) of the support frame (1) through the plug (7), the positive electrode (32A) and the negative electrode (32B) of the illumination unit (3) are then plugged into the socket or jack (8) of the support frame (1) through the plug (5), the positive electrode (32A) and negative electrode (32B) of the illumination unit (3) are respectively connected to the electricity of the positive conductive body (21) and negative conductive body (22) of the conductive entity (2).

11. The display system, as claimed in claim 1, is **characterized in that** the positive conductive body (21) and negative conductive body (22) of said conductive entity (2) are respectively installed in the sockets or jacks (41), (42) of the support frame (1), the positive electrode (32A) and the negative electrode (32B) of the illumination unit (3) are installed on the plugs (51), (52) of the base (31), the plugs (51), (52) are connected to plugs (71), (72) through wires (61), (62), the positive electrode (32A) and negative electrode (32B) of the illumination unit (3) are installed at the sockets or jacks (81), (82) of the base (31), plugs (51), (52) are connected to plugs (71), (72) through wires (61), (62), the illumination unit (3) is plugged into the sockets or jacks (41), (42) of the support frame (1) through the plugs (71), (72), the positive electrode (32A) and negative electrode (32B) of the illumination unit (3) are plugged into the sockets or jacks (81), (82) of the support frame (1) through the plugs (51), (52), the positive electrode (32A) and negative electrode (32B) of the illumination unit (3) are respectively connected to the electricity of the positive conductive body (21) and the negative conductive body (22) of the conductive entity (2).

12. The display system, as claimed in claim 1, is **characterized in that** the positive conductive body (21) and the negative conductive body (22) of the conductive entity (2) are installed at the socket or jack (4) of the support frame (1), the positive electrode (32A) and the negative electrode (32B) of the illumination unit (3) are installed at the plug or socket (5) of the base (31), the illumination unit (3) is then plugged into the socket or jack (4) of the support frame 1 through the plug or socket (5), the positive electrode (32A) and negative electrode (32B) of the illumination unit (3) are respectively connected to the electricity of the positive conductive body (21) and the negative conductive body (22) of the conductive entity (2).

13. The display system, as claimed in claim 1, is **characterized in that** the positive conductive body (21) and the negative conductive body (22) of said conductive entity (2) are respectively installed at the sockets or jacks (41), (42) of the support frame (1), the positive electrode (32A) and the negative electrode (32B) of the illumination unit (3) that are installed at the base (31) can be directly plugged into the sockets or jacks (41), (42) of the support frame (1), or the positive electrode (32A) and the negative electrode (32B) of the illumination unit (3) are installed at the plugs (51), (52) which are installed on the base (31), the illumination unit (3) is then plugged into the sockets or jacks (41), (42) of the support frame (1) through the plugs (51), (52), the positive electrode (32A) and negative electrode (32B) of the illumination unit (3) are respectively connected to the electricity of the positive conductive body (21) and the negative conductive body (22) of the conductive entity (2).

14. The display system, as claimed in claim 1, is **characterized in that** said support frame (1) is formed with a plurality of concave grooves, the positive conductive body (21) and the negative conductive body (22) of the conductive entity (2) are formed with a plurality of electrode boards, which are respectively installed at the upper and lower inner surfaces of the concave grooves of the support frame (1), the positive electrode (32A) and negative electrode (32B) of the illumination unit (3) are formed with flexible electrodes, which are respectively installed at the upper and lower areas of the base (31), the base (31) of the illumination unit (3) is plugged into the concave grooves of the support frame (1), the positive electrode (32A) and negative electrode (32B) of the illumination unit (3) are respectively connected to the electricity of the positive conductive body (21) and the negative conductive body (22) of the conductive entity (2).

15. The display system, as claimed in claim 14, is **characterized in that** said support frame (1) is formed with a plurality of concave grooves at its upper inner surfaces or lower inner surfaces, the positive conductive body (21) and the negative conductive body (22) of the conductive entity (2) are made into electrode boards, which are all installed at the upper inner surface or at the lower inner surface of the support frame (1), the positive electrode (32A) and the negative electrode (32B) of the illumination unit (3) are formed with flexible electrodes, which are respectively installed at the upper area of the base (31), the base (31) of the illumination unit (3) is plugged into the concave groove of the support frame (1), the positive electrode (32A) and the negative electrode (32B) of the illumination unit (3) are respectively connected to the electricity of the positive conductive body (21) and the negative conductive body (22) of the conductive entity (2).

16. The display system, as claimed in claim 1, is **characterized in that** said support frame (1) can be formed with a magnetic tier, the positive conductive body (21) and the negative conductive body (22) of the conductive entity (2) are allocated over the magnetic tier, the positive electrode (32A) and the negative electrode (32B) of the illumination unit (3) are respectively installed at the back of the base (31), the illumination unit (3) is magnetized onto the support frame (1) through the magnetic tier element (8), which is installed at the back of the base (31), the positive electrode (32A) and the negative electrode (32B) of the illumination unit (3) are connected to the electricity of the positive conductive body (21) and the negative conductive body (22) of the conductive entity (2) respectively.

17. The display system, as claimed in claim 15, is **characterized in that** said conductive entity (2) is formed as stripes, the positive conductive body (21) and the negative conductive body (22) are alternatively allocated therein, and all the positive conductive bodies are connected to electricity, the negative conductive bodies are also connected to electricity, wherein any distance between a positive conductive body and its adjacent negative conductive body is aligned with the distance between the positive electrode (32A) and the negative electrode (32B) of the illumination unit (3).

18. The display system, as claimed in claim 15, is **characterized in that** said conductive entity (2) can also be formed as a lattice structure, any distance between a positive conductive body (21) and its adjacent negative conductive body (22) is aligned with the distance between the positive electrode (32A) and the negative electrode (32B) of the illumination unit (3).

19. The display system, as claimed in claims 1 to 18, is **characterized in that** said illumination body (32) is an illuminating diode.

20. The display system, as claimed in claim 19, is **characterized in that** said illumination body (32) is arranged on the front surface of the base (31).
